# FASCICULE DE BREVET EUROPEEN

(11) **EP 3 285 984 B1**
(45) Date de publication et mention de la délivrance du brevet: **23.10.2019**
(21) Numéro de dépôt: 16721464.2
(22) Date de dépôt: 21.04.2016
(51) Int. Cl.: B29C 49/78, B29C 49/70, B29C 49/48, B29C 49/06, B29C 49/12, B29C 49/36, B29C 49/66, B29K 101/12, B29L 31/00

(54) **PROCÉDÉ DE REFROIDISSEMENT DE MOULES CHAUFFÉS D'UNE MACHINE DE MOULAGE DE RÉCIPIENTS**
VERFAHREN ZUM KÜHLEN VON ERWÄRMTEN FORMEN AUS EINER MASCHINE ZUM FORMEN VON BEHÄLTERN
METHOD FOR COOLING HEATED MOLDS FROM A MACHINE FOR MOLDING CONTAINERS

(30) Priorité: 23.04.2015 FR 1553632
(43) Date de publication de la demande: 28.02.2018
(73) Titulaire: Sidel Participations, 76930 Octeville-sur-Mer (FR)
(72) Inventeur: CHOMEL, Nicolas, 76930 Octeville-sur-mer (FR); FOURNIER, Damien, 76930 Octeville-sur-mer (FR)
(74) Mandataire: Grassin d'Alphonse, Emmanuel Jean Marie
(86) Numéro de dépôt international: PCT/FR2016/050932
(87) Numéro de publication internationale: WO 2016/170277

(56) Documents cités:
- EP-A2- 2 269 803
- US-A- 4 496 517
- US-A1- 2009 160 102
- US-A1- 2014 145 377

## Description

La présente invention concerne un procédé de refroidissement de moules chauffés d'une machine de moulage de récipients.

Des procédés apparentés de l'art antérieur sont décrits dans US204/145377A1, US496517A, et US2009/160102A1.

La présente invention concerne plus particulièrement un procédé de refroidissement de moules chauffés d'une machine de moulage de récipients en matériau thermoplastique par étirage-soufflage de préformes chaudes au moyen d'au moins un fluide sous pression, ladite machine de type rotatif comportant au moins des unités de moulage, comprenant chacune au moins un moule et qui sont agencées en périphérie d'un carrousel qui est apte à être entraîné en rotation autour d'une axe de rotation de la machine, chaque unité de moulage comportant au moins des moyens de soufflage intégrant une tige d'étirage, des moyens de chauffage associés audit au moins un moule de l'unité pour le chauffer, ledit moule comportant au moins deux demi-moules qui comportent chacun une face interne de moulage et qui sont respectivement montés sur des supports mobiles autour d'un axe entre au moins une position ouverte et une position fermée de l'unité, dans laquelle lesdites faces internes desdits au moins deux demi-moules joints délimitent ensemble au moins une partie d'une cavité de moulage du récipient.

Le choix du dispositif et du procédé de fabrication de récipients dépend en outre de l'utilisation prévue des récipients. A titre d'exemples non limitatifs, l'utilisation ou non d'un dispositif d'étirage en combinaison avec les moyens de soufflage ou encore la mise en œuvre d'un refroidissement de l'intérieur du récipient par un balayage fluidique réalisé avec une tige d'étirage, ou la présence d'un fond de moule venant compléter la cavité sont des caractéristiques du dispositif ou du procédé de fabrication qui sont fonction des applications et de l'utilisation des récipients.

L'invention concerne ainsi plus particulièrement un procédé de fabrication utilisant des moules dits « chauffés », encore appelés de type « HR » acronyme de l'anglais « *Heat resistant », (« HR » pouvant également désigner par extension les récipients obtenus par un tel procédé de fabrication*).

Lorsque les récipients en matière thermoplastique fabriqués par la machine de moulage doivent être remplis avec un liquide chaud, tel que du thé ou un jus de fruit pasteurisé, il existe un risque qu'un récipient moulé à une température ambiante se rétracte et se déforme.

Pour éviter ce phénomène de rétractation lors d'un remplissage à chaud (« *hot fill »* en anglais), on recherche à accroître la résistance de la matière aux déformations induites par l'élévation de température lors du remplissage.

Une technique connue consiste à accroître de manière thermique la cristallinité de la matière en chauffant le moule à une température déterminée qui, supérieure à 100°C, est selon les applications généralement comprise entre 120°C et 160°C, et cela pour conférer au matériau thermoplastique constituant le récipient une structure résistante à la chaleur.

Lors du cycle de fabrication du récipient par la machine, le récipient est maintenu à la fin du soufflage en contact avec la face interne chauffée desdits au moins deux demi-moules formant le moule pour provoquer un accroissement de la cristallinité de la matière, cette technique est encore appelée thermofixation (ou *« heat set »* en anglais).

Pour cette application particulière, les unités de moulage de la machine comportent chacune des moyens de chauffage qui sont associés au moule pour le chauffer à la température souhaitée et différents types de moyens de chauffage du moule sont connus de l'art antérieur.

Selon une première conception, il est connu de chauffer le moule au moyen d'un circuit fluidique qui est réalisé dans l'épaisseur du moule et dans lequel est mis en circulation un fluide caloporteur chaud.

Selon une deuxième conception, il est connu d'agencer des résistances électriques chauffantes dans l'épaisseur du moule afin de chauffer électriquement le moule.

On se reportera à titre d'exemple non limitatif au document WO-2013/093335 de la Demanderesse pour de plus amples détails sur un moule équipés de tels moyens de chauffage de type électrique.

La fabrication de récipients par la machine de moulage doit cependant être parfois interrompue pour réaliser des interventions sur la machine, plus particulièrement certaines opérations sur le moule chauffé nécessitent qu'un opérateur puisse intervenir en toute sécurité sur le moule et parfois puisse le manipuler.

Une intervention d'au moins un opérateur peut être requise pour effectuer par exemple une opération de nettoyage de la face interne des moules ou encore pour procéder au changement des moules, notamment lorsque l'on souhaite changer le format du récipient à fabriquer.

L'opérateur ne peut pas manipuler en toute sécurité un tel moule chauffé immédiatement après l'arrêt de la fabrication car le moule, généralement à une température supérieure à 100°C, est alors trop chaud.

Or, il n'est pas économiquement rentable d'attendre passivement que le moule refroidisse, par convection naturelle, en immobilisant pendant ce temps l'ensemble de la chaîne de production.

Pour résoudre ce problème, il est connu d'utiliser des moyens de refroidissement du moule pour refroidir activement de tels moules chauffés (encore appelés parfois de type « HR ») et ainsi réduire le temps d'arrêt nécessaire avant de pouvoir procéder à une intervention humaine sur les moules de la machine en toute sécurité.

Lorsque le moule est chauffé par un circuit de fluide caloporteur chaud, on a proposé de remplacer temporairement ce fluide caloporteur chaud par du fluide caloporteur froid pour le refroidir.

Le document EP-2.703.146 au nom de la Demanderesse décrit un exemple de refroidissement d'un moule chauffé par un tel fluide caloporteur froid qui est mis en circulation directement contre la face externe des parties du moule.

Si un tel procédé permet de refroidir le moule, il n'est toutefois pas sans présenter certains inconvénients.

En effet, la fabrication d'un moule équipé d'un circuit de fluide caloporteur dédié au refroidissement s'avère onéreuse et complexe à réaliser, notamment en présence de résistances de chauffage dans l'épaisseur du moule.

Le document US-2010/0327474 au nom de Krones AG décrit un autre exemple de procédé de refroidissement de moules chauffés d'une machine en vue de réaliser un changement des moules.

Selon les enseignements de ce document, un fluide de refroidissement est introduit simultanément à l'intérieur de tous les moules vides (sans préformes) des unités de moulage de récipients de la machine, ledit fluide de refroidissement étant amené au contact de la face interne du moule par l'intermédiaire d'une tige d'étirage.

Cependant, un tel procédé de refroidissement donne en réalité des résultats qui sont pas ou peu satisfaisants. Ce procédé de refroidissement présente notamment l'inconvénient d'effectuer un refroidissement simultanément dans tous les moules.

En effet, le refroidissement simultané de l'ensemble des moules s'avère au final peu efficace en raison de la trop faible quantité de fluide introduite dans chacun des moules.

Pour être améliorée, l'Homme du métier procèderait à d'importantes modifications de l'ensemble de moyens présents et utilisés lors de la fabrication de récipients avec les moules de la machine, ce qui n'est cependant pas souhaitable en raison des conséquences économiques que cela impliquerait.

De plus en refroidissant simultanément la totalité des moules de la machine, le fluide de refroidissement est introduit par chacune des tiges d'étirage indépendamment de la position ouverte ou fermée occupée par les unités de moulage.

Le refroidissement obtenu est ainsi peu efficace pour les unités ouvertes dont les parties du moule sont notamment éloignées de la tige d'étirage et donc du fluide de refroidissement amené par la tige. Une partie du fluide de refroidissement est par conséquent gaspillée au regard du refroidissement recherché.

Le but de la présente invention est de résoudre au moins une partie des inconvénients de l'art antérieur et de proposer un procédé de refroidissement permettant notamment d'obtenir un refroidissement qui soit efficace et rapide et cela de manière fiable, simple et peu coûteuse.

Dans ce but, la présente invention propose un procédé de refroidissement de moules chauffés du type décrit précédemment, caractérisé en ce que ledit procédé de refroidissement comporte, pour refroidir lesdits moules, au moins une étape de refroidissement consistant à introduire sélectivement au moins un fluide de refroidissement à l'intérieur de la cavité de moulage d'au moins certaines des unités de moulage qui, après arrêt du carrousel pour les immobiliser au moins durant ladite étape de refroidissement, se trouvent dans une zone de refroidissement déterminée dans laquelle lesdites unités de moulage sont en position fermée.

Avantageusement, le fluide de refroidissement est introduit lors de chaque étape de refroidissement dans certains seulement des moules et non pas dans la totalité des moules ce qui permet d'optimiser l'efficacité du refroidissement obtenu pour une consommation donnée de fluide de refroidissement.

Avantageusement, le procédé de refroidissement permet d'obtenir un refroidissement efficace sans nécessiter aucune modification de la machine de moulage.

Les moules refroidis sont avantageusement immobiles lors de l'étape de refroidissement dont la durée est alors libre puisque les unités de moulage sont présentes dans la zone de refroidissement et en position fermée le demeurent.

Par comparaison, lorsque le carrousel est entraîné en rotation comme dans le document US-2010/0327474 précité, les unités sont alternativement en position fermée et surtout ouverte en fonction du secteur angulaire de la machine dans lequel une unité donnée se trouve. Le fait que les unités de moulages soient immobiles lorsque les moules sont refroidis selon le procédé est particulièrement avantageux en matière d'économie d'énergie.

On économise notamment de l'énergie du fait de l'absence d'entraînement en continu du carrousel lors du refroidissement.

Par rapport au fonctionnement de la machine en mode de fabrication de récipients, certains moyens peuvent ne pas être en service ou l'être avec une moindre consommation d'énergie.

A titre d'exemples non limitatifs, lorsque le carrousel de la machine est entraîné en rotation en continu au cours du refroidissement, certains moyens tels que des moyens d'éjection de récipients ou encore de freinage fonctionnent alors automatiquement dans des conditions identiques à celles du mode de fabrication, ce qui n'est plus le cas avec le procédé de l'invention.

La mise en œuvre du procédé de refroidissement s'effectue en utilisant avantageusement l'ensemble des moyens existants, sans modifications, y compris de la source de fluide de refroidissement sous pression tel qu'au moins de l'air jusqu'à la tige d'étirage pour son introduction à l'intérieur de la cavité de moulage.

Grâce à l'introduction sélective du fluide de refroidissement, le fluide de refroidissement est susceptible d'être introduit dans chacun des moules choisis avec un débit qui est supérieur à celui de l'art antérieur en utilisant une même source de pression.

La quantité de fluide de refroidissement amenée au contact du moule est plus importante, augmentant l'échange thermique survenant entre ledit fluide et le moule.

L'introduction du fluide de refroidissement uniquement dans un moule d'une unité de moulage occupant sa position fermée, et de préférence verrouillée en position fermée, participe grandement à accroître l'efficacité du refroidissement.

En effet, le fluide de refroidissement ne peut se répandre hors du moule en position fermée, le fluide circule donc dans un volume confiné formé par la cavité de moulage, opérant alors un échange thermique au contact du moule à refroidir avant de s'évacuer par l'orifice.

Avantageusement, les fuites du fluide de refroidissement hors du moule de l'unité de moulage en position fermée peuvent être encore réduites en verrouillant l'unité de moulage en position fermée.

Avantageusement, les moyens de compensation équipant une unité de moulage sont également susceptibles d'être utilisés lors de l'étape de refroidissement pour réduire les fuites de fluide hors de l'unité de moulage.

L'utilisation des moyens de verrouillage et/ou des moyens de compensation en limitant les fuites participent également à limiter l'émission de bruit, notamment de sifflements, pouvant survenir en fonction de la pression du fluide de refroidissement lors de son introduction dans la cavité de moulage.

Avantageusement, le fluide de refroidissement introduit de manière continue, pendant une durée déterminée, permet d'obtenir un effet de brassage à l'intérieur de la cavité de moulage, effet qui est particulièrement favorable aux échanges thermiques. Le fluide de refroidissement se propage à l'intérieur de la cavité de moulage du moule sous la forme d'un flux turbulent.

Le fluide de refroidissement s'échappant par l'orifice du moule fermé est renouvelé, remplacé par d'autre fluide de refroidissement qui continue d'être introduit par la tige d'étirage, créant ainsi une circulation permanente dans la cavité de moulage.

Avantageusement, l'introduction intermittente du fluide de refroidissement suivant une séquence comportant une interruption entre deux introductions successives permet d'utiliser une quantité de fluide de refroidissement optimale pour un transfert thermique donné, en évitant une évacuation trop rapide du fluide hors de la cavité de moulage.

Le temps total nécessaire pour refroidir l'ensemble des moules des unités de moulage d'une machine est inférieur lorsque l'étape de refroidissement du procédé de refroidissement est réalisée dans certains seulement des moules puis dans d'autres moules, et ceci même en la répétant plus d'une fois dans chacun des moules ou groupes de moules.

Or l'Homme du métier aurait nécessairement pensé le contraire et c'est raison pour laquelle le refroidissement simultané de tous les moules a constitué jusqu'alors la solution technique de l'art antérieur.

Selon d'autres caractéristiques de l'invention :
- l'introduction du fluide de refroidissement selon l'étape de refroidissement est réalisée simultanément dans toutes les unités de moulage se trouvant dans ladite zone de refroidissement ;
- l'introduction du fluide de refroidissement selon l'étape de refroidissement est réalisée simultanément dans certaines seulement des unités de moulage se trouvant dans ladite zone de refroidissement ;

- la zone de refroidissement correspond à un secteur angulaire centré sur l'axe de rotation de la machine et présentant un angle (β₁ ou β₂) dont la valeur est inférieure ou égale à (360° - α) avec un angle (α) qui correspond au secteur angulaire dans lequel lesdites unités de moulage sont en position ouverte.
- la zone de refroidissement correspond à un secteur angulaire centré sur l'axe de rotation de la machine et présentant un angle dont la valeur est inférieure ou égale à 180° ;
- l'introduction du fluide de refroidissement au cours de l'étape de refroidissement s'effectue dans des unités de moulage qui sont verrouillées en position fermée par des moyens de verrouillage que comportent chacune desdites unités de moulage de la machine ;
- ledit fluide de refroidissement comporte au moins un gaz sous pression ;
- ledit au moins un gaz sous pression du fluide de refroidissement est de l'air ;
- du fluide de refroidissement est introduit à l'intérieur de la cavité de moulage par au moins une tige d'étirage ;
- la tige d'étirage est déplacée axialement à l'intérieur de la cavité de moulage au cours de ladite étape de refroidissement pour réaliser un balayage axial de la cavité de moulage ;
- la tige d'étirage est entrainée sélectivement en rotation pour réaliser un balayage circulaire de la cavité de moulage au moyen de fluide de refroidissement ;
- du fluide de refroidissement est introduit à l'intérieur de la cavité de moulage par des moyens de démoulage du fond équipant les unités de moulage de ladite machine ;
- du fluide de refroidissement est introduit par intermittence lors de l'étape de refroidissement selon au moins une séquence qui comporte au moins une introduction dudit fluide pendant une durée déterminée suivie d'un intervalle au cours duquel ladite introduction est interrompue ;
- ledit procédé de refroidissement comporte au moins une étape de mesure de température pour déterminer la température des moules refroidis et ladite étape de refroidissement est répétée dans lesdites unités de moulage jusqu'à ce que ladite température des moules soit inférieure ou égale à une température de consigne déterminée.

D'autres caractéristiques et avantages de l'invention apparaitront au cours de la lecture de la description détaillée qui va suivre pour la compréhension de laquelle on se reportera aux dessins annexés parmi lesquels :

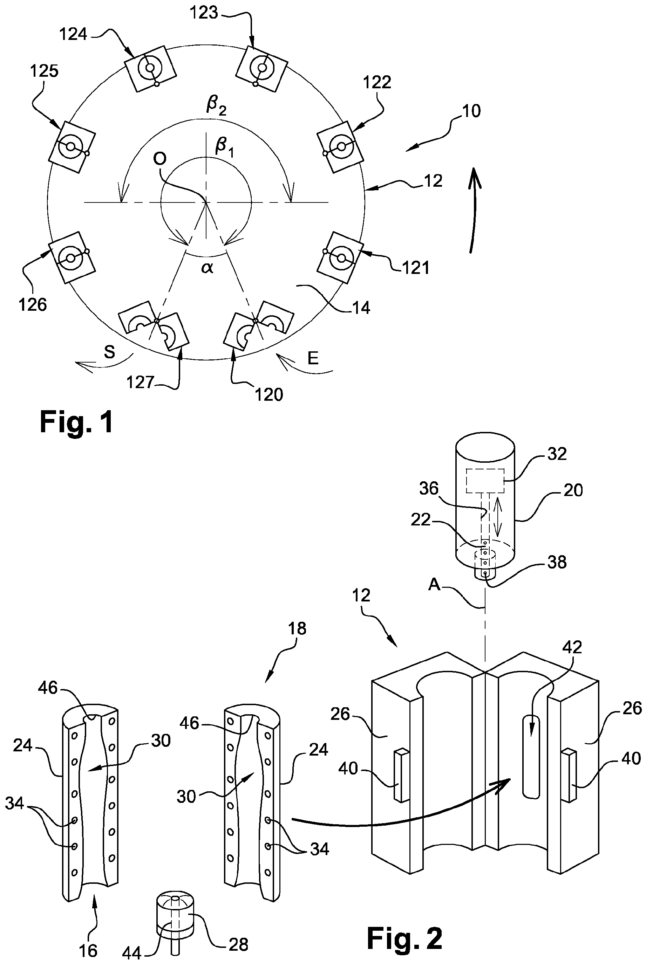

- la figure 1 est une vue de dessus qui représente schématiquement un exemple de réalisation d'une machine de moulage de type rotative et qui illustre les unités de moulage (sans les moyens de soufflage et d'étirage) réparties circonférentiellement sur le carrousel et qui, en fonction de leur position relative par rapport à l'entrée ou la sortie de la machine, sont en position ouverte ou en position fermée ;
- la figure 2 est une vue en perspective qui représente l'une des unités de moulage de la machine selon l'exemple de réalisation de la figure 1 et qui l'illustre en détails avec, hors de l'unité en position ouverte, un éclaté d'un moule réalisé en trois parties comportant deux demi-moules et un fond de moule ;

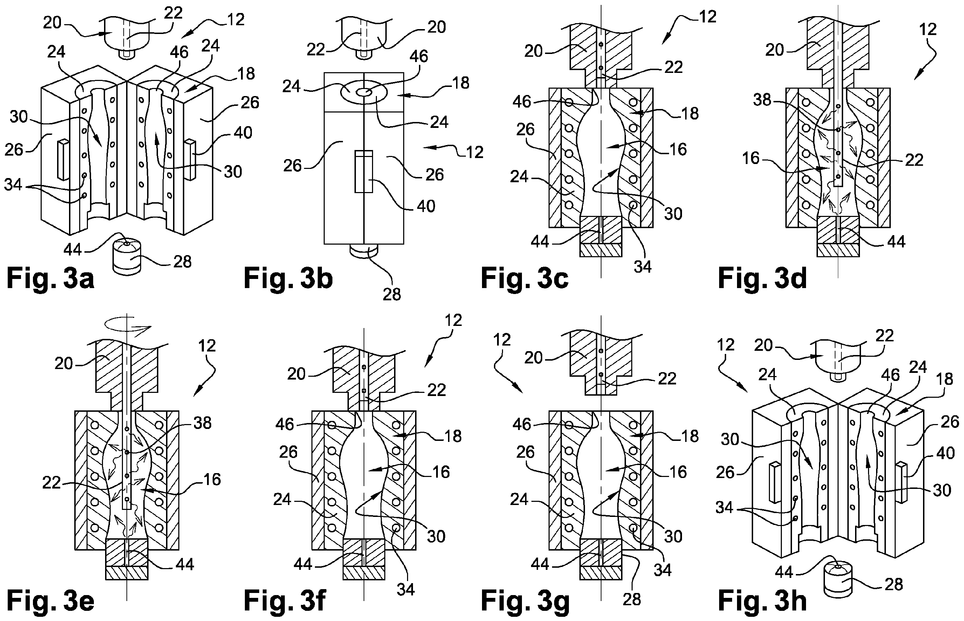

- les figures 3a à 3h sont des vues schématiques qui représentent une unité de moulage de la machine en perspective ou en coupe et qui illustrent les principales étapes d'un cycle de refroidissement du moule de l'une des unités de moulage.

Dans la description détaillée qui suit la direction « axiale » correspond par convention à celle de l'axe de rotation de la machine et la direction « radiale » est orthogonale à la direction axiale.

L'invention concerne, d'une manière générale, le domaine de la fabrication de récipients en matériau thermoplastique à partir de préformes, tels que des bouteilles fabriquées en PET (Polyéthylène Téréphtalate).

De tels récipients creux sont notamment mais non exclusivement utilisés dans le domaine de l'agro-alimentaire pour le conditionnement de liquides tels que de l'eau, du lait, des jus, etc.

Leur fabrication est réalisée dans une installation de fabrication de récipients comportant en outre une machine 10 de moulage de récipients en matière thermoplastique à partir de préformes chaudes, plus généralement d'ébauches dont les préformes constituent un exemple particulier.

On a plus particulièrement représenté sur la figure 1, de manière schématique et en vue de dessus, un exemple de réalisation d'une telle machine 10 de moulage (encore appelée « souffleuse »).

La machine 10 de moulage de type rotatif comporte notamment des unités 12 de moulage qui sont agencées radialement en périphérie d'un carrousel 14 qui est entraîné en rotation autour d'un axe O de rotation de la machine.

La machine 10 de moulage comporte des moyens d'entraînement du carrousel 14, tel qu'un moteur, qui sont aptes à l'entraîner en rotation à une vitesse de rotation déterminée.

Les unités 12 de moulage sont avantageusement réparties circonférentiellement de manière régulière autour de l'axe O de rotation.

Dans l'exemple de réalisation, la machine 10 de moulage comporte huit unités 12 moulage, consécutivement référencées de 120, 121, 122, ... jusqu'à 127 pour pouvoir les distinguer en fonction de leur position relative autour de l'axe O de rotation. Chacune desdites unités 12 se déplace avec le carrousel 14 pour effectuer un tour, soit 360°, avant de revenir à la même position.

La machine 10 de moulage comporte un premier groupe d'unités 12 de moulage, dites paires, formées respectivement des quatre unités 120, 122, 124 et 126 et un deuxième groupe d'unités 12 de moulage, dites impaires, formées respectivement des quatre autres unités 121, 123, 125 et 127.

La machine 10 de moulage fonctionne au moins selon un premier mode de fonctionnement, dit mode de fabrication, dans lequel la machine est alimentée en préformes pour fabriquer des récipients.

La machine 10 de moulage est alimentée en entrée E avec un flux continu de préformes chaudes et délivre en sortie S autant de récipients, tels que des bouteilles.

Un cycle de fabrication d'un récipient au sein de la machine correspond à un tour effectué par chacune des unités 12 de moulage depuis l'entrée E où une préforme chaude est introduite dans l'une des unités 12 en position ouverte jusqu'à la sortie S où l'unité, ayant entre temps sur ledit tour occupé la position fermée avec verrouillage pour former le récipient, est à nouveau ouverte pour en extraire le récipient.

Selon un procédé de fabrication connu, les préformes préalablement obtenues par injection doivent ensuite être réchauffées dans un four (non représenté), associé à la machine 10 de moulage, jusqu'à une température de transition vitreuse afin d'en rendre la matière thermoplastique suffisamment malléable.

On se reportera à titre d'exemple non limitatif à la figure 5 du document WO-99/03667 au nom de la Demanderesse pour une représentation d'une installation de fabrication de récipients fonctionnant selon un tel procédé et comportant notamment un four associé à une machine de moulage (ou souffleuse).

Chaque préforme chaude est transférée depuis la sortie du four par des moyens de transfert (non représentés), tels qu'au moins une roue, pour être insérée dans une cavité 16 de moulage d'un moule 18 de l'une desdites unités 12 de moulage de la machine 10.

Chaque préforme est alors mise en forme par des moyens 20 de soufflage et, selon les applications, une tige 22 d'étirage associée.

En variante et selon un autre procédé de fabrication, les préformes sont obtenues par extrusion et directement transformées en récipients dans la machine 10 de moulage, un tel procédé de fabrication est encore appelé « extrusion-soufflage ».

Le moule 18 d'une unité 12 de moulage est formé d'au moins deux demi-moules, respectivement référencés 24, qui sont respectivement montés de manière amovible sur des supports 26.

Au moins l'un des supports 26 du moule 18 est monté mobile par rapport à l'autre autour d'un axe A de rotation, respectivement entre au moins une position ouverte et une position fermée de l'unité 12 de moulage.

Une unité 12 de moulage comportant des supports 26 de moule respectivement montés mobiles en rotation l'un par rapport à l'autre est encore appelée « en portefeuille », du fait de la cinématique de rotation entre les positions ouverte et fermée.

On se reportera à titre d'exemple non limitatif au document FR-2.843.714 pour de plus amples détails sur la réalisation d'un dispositif de commande mécanique d'ouverture et de fermeture d'une telle unité de moulage de type en portefeuille (ou « *book-like opening* » en anglais).

De préférence, et de façon connue, le moule 18 est réalisé en trois parties et comporte un fond 28 de moule, qui est complémentaire des deux demi-moules 24, et comporte l'empreinte du fond du récipient. Dans ce cas, les demi-moules 24 déterminent l'empreinte de la paroi du corps du récipient.

Le fond 28 de moule est monté sur un support, distinct des supports 26, qui se déplace axialement entre une position basse et une position haute dans laquelle les supports 26 se referment autour dudit fond 28 de moule.

Les demi-moules 24 du moule 18 sont fixés de manière amovible sur les deux supports 26 par des moyens de fixation (non représentés).

On se reportera à titre d'exemple non limitatif de la structure d'une unité de moulage et des moyens de fixation du moule au document FR-2.949.707 ou encore EP-0.821.641, respectivement au nom de la Demanderesse.

Chaque demi-moule 24 comporte une face 30 interne de moulage dans laquelle est réalisée en creux une empreinte correspondant à une partie du récipient à fabriquer.

En position fermée de l'unité 12, lesdites faces 30 internes desdits au moins deux demi-moules 24 joints délimitent ensemble ladite cavité 16 de moulage du récipient, complétée le cas échéant par la face supérieure du fond 28 de moule de récipient.

Dans l'exemple de réalisation, chaque unité 12 de moulage de la machine 10 comporte au moins des moyens 20 de soufflage associés.

De tels moyens 20 de soufflage sont bien connus et par exemple réalisés sous la forme d'une tuyère agencée au-dessus de l'unité 12 et qui est montée mobile axialement pour venir coiffer l'unité 12 de moulage.

Lors de la fabrication d'un récipient, les moyens 20 de soufflage viennent coopérer avec la face supérieure de l'unité 12 de moulage en position fermée pour introduire au moins un fluide de soufflage à l'intérieur de la préforme chaude par l'ouverture délimitée par son col faisant saillie hors du moule.

On se reportera à titre d'exemples non limitatifs au document FR-2.764.544 ou au document EP-1.927.461 pour de plus amples détails sur la réalisation de tels moyens de soufflage.

La fabrication d'un récipient est réalisée par soufflage d'une préforme chaude dans un moule 18 d'une unité 12 de moulage de la machine 10 au moyen d'au moins un fluide sous pression, généralement de l'air.

Dans l'exemple de réalisation, la fabrication des récipients est réalisée par étirage-soufflage. Les moyens 20 de soufflage intègrent avantageusement au moins une tige 22 d'étirage.

La tige 22 d'étirage est entraînée axialement en déplacement par des moyens 32 d'entraînement associés.

De préférence, les moyens 32 d'entraînement de la tige 22 d'étirage comportent au moins un moteur linéaire. En variante ils sont constitués par des moyens de type mécanique.

Par comparaison avec des moyens d'entraînement de type mécanique, par exemple à came et galet, un moteur linéaire offre une totale liberté de commande du déplacement axial de la tige 22 d'étirage.

Par comparaison toujours avec des moyens d'entraînement de type à came et galet, le coulissement axial de la tige 22 d'étirage est avantageusement indépendant du déplacement relatif de l'unité 12 de moulage lorsque le carrousel 14 est entraîné en rotation.

La tige 22 d'étirage est montée coulissante axialement pour être introduite sélectivement à l'intérieur de la préforme à travers l'ouverture délimitée radialement par son col, un espace annulaire étant laissé libre entre le col et la tige pour permettre le passage du fluide de soufflage.

La tige 22 d'étirage est montée mobile axialement entre au moins une première position haute et une deuxième position basse.

Dans la première position, la tige 22 s'étend hors du moule 18 et dans la deuxième position la tige 22 est déplacée vers le bas pour venir étirer axialement la préforme à l'intérieur du moule, lors du soufflage, en s'appuyant contre le fond de ladite préforme.

L'unité 12 de moulage comporte des moyens 34 de chauffage associés au moule 18 de l'unité pour le chauffer.

Les moyens 34 de chauffage sont par exemple formés par des résistances électriques représentées très schématiquement sur la figure 2. Dans une variante, les moyens 34 de chauffage sont formés de conduites parcourus par un fluide chaud.

Il est également connu pour certaines applications de réaliser, avant son extraction, un refroidissement du récipient à l'intérieur du moule.

Pour réaliser un tel refroidissement du récipient, on utilise généralement la tige 22 d'étirage qui, dans ce cas, est creuse et assure alors une double fonction, à savoir une fonction d'étirage d'une part et une autre fonction de refroidissement du récipient d'autre part.

La tige 22 d'étirage creuse comporte par exemple un canal 36 central s'étendant axialement et communiquant avec une pluralité d'orifices 38 par lesquels un gaz, en particulier de l'air, est injecté à l'intérieur du récipient fabriqué afin de le refroidir.

On se reportera à titre d'exemple non limitatif au document WO-2009/044067 pour de plus amples détails sur la réalisation d'un tel refroidissement du récipient.

Chaque unité 12 de moulage comporte encore de manière connue des moyens 40 de verrouillage pour venir verrouiller l'unité 12 en position fermée.

Les moyens 40 de verrouillage sont commandés sélectivement par des moyens de commande associés, respectivement entre une position déverrouillée et une position verrouillée dans laquelle l'unité 12 de moulage est maintenue en position fermée.

On se reportera à titre d'exemple non limitatif au document FR-2.646.802 pour de plus amples détails sur de tels moyens de verrouillage pour verrouiller temporairement en position fermée une unité de moulage de récipients.

De préférence, chaque unité 12 de moulage comporte des moyens 42 de compensation, tels qu'une chambre de compensation disposée dans l'un des supports 26.

On se reportera à titre d'exemple non limitatif au document FR-2.659.265 pour de plus amples détails sur la fonction et la conception d'une telle chambre de compensation lors du moulage du récipient.

Avantageusement, l'unité 12 de moulage comporte des moyens 44 de démoulage du fond. Les moyens 44 de démoulage du fond sont agencés dans la partie du moule 18 correspondant à l'empreinte du fond du récipient, par exemple dans le fond 28 de moule lorsque ledit moule 18 est réalisé en trois parties.

Les moyens 44 de démoulage sont utilisés pour faciliter le démoulage du fond du récipient fabriqué par décollement de ce dernier du fond de moule. A cet effet, ils comportent généralement des moyens d'injection d'un fluide sous pression, tel que de l'air.

L'air sous pression est introduit à travers le fond 28 de moule (ou en l'absence d'un tel fond 28 de moule à travers le fond d'au moins l'un des demi-moules 24) pour exercer sur le fond du récipient fabriqué une pression afin de le décoller de manière à en faciliter l'extraction hors du moule 18.

On se reportera à titre d'exemple non limitatif au document FR-2.983.766 qui décrit et représente de tels moyens de démoulage du fond destinés à faciliter l'extraction du récipient, notamment lorsque le fond du récipient présente une forme pétaloïde complexe.

En position fermée, le moule 18 présente un orifice 46 ménagé dans sa face supérieure et permettant, dans le mode de fabrication, le passage de la préforme chaude, dont le corps s'étend alors à l'intérieur de la cavité 16 de moulage et dont le col fait saillie à l'extérieur.

Tel qu'indiqué précédemment, la description qui vient d'être faite correspond à une utilisation conventionnelle d'une machine 10 de moulage dans le premier mode de fonctionnement, dit mode de fabrication, dans lequel la machine 10 est alimentée en préformes pour fabriquer des récipients par étirage-soufflage.

La machine 10 de moulage fonctionne également suivant un second mode de fonctionnement, dit mode de refroidissement, dans lequel la machine 10 cesse notamment d'être alimentée en préformes.

La machine 10 de moulage est en particulier commutée dans un tel mode de refroidissement pour mettre en œuvre le procédé de refroidissement de moules selon l'invention.

Les principales étapes du procédé de refroidissement sont représentées sur les figures 3a à 3h qui illustrent le refroidissement du moule dans l'une des unités 12 de moulage de la machine 10.

Le procédé de refroidissement comporte au moins une étape préliminaire à ladite au moins une étape de refroidissement, ladite étape préliminaire consistant à arrêter de chauffer chacun des moules 18 à refroidir desdites unités 12 de moulage.

L'étape préliminaire consiste par exemple à cesser d'alimenter électriquement les résistances lorsque, selon l'exemple de réalisation illustré à la figure 2, les moyens 34 de chauffage sont formés par des résistances électriques ou à cesser de faire circuler du fluide chaud lorsque les moyens 34 sont des conduites.

Le procédé de refroidissement comporte, pour refroidir lesdits moules 18, au moins une étape de refroidissement consistant à introduire sélectivement au moins un fluide de refroidissement à l'intérieur de la cavité 16 de moulage d'au moins certaines des unités 12 de moulage qui, après arrêt du carrousel 14 pour les immobiliser au moins durant ladite étape de refroidissement, se trouvent dans une zone de refroidissement déterminée dans laquelle lesdites unités 12 de moulage sont en position fermée.

Par comparaison avec le document US-2010/0327474, l'étape de refroidissement n'est pas mise en œuvre dans toutes unités de moulage mais dans seulement certaines d'entre elles dès lors que les moules des unités de moulage en position ouverte ne sont pas refroidis.

De plus dans l'art antérieur, les unités de moulage sont déplacées lors du refroidissement car le carrousel est entraîné en rotation, les unités de moulage alternent alors position ouverte et position fermée.

Par comparaison avec l'art antérieur dans lequel la machine est utilisée de manière dynamique lors du refroidissement, un refroidissement exécuté en statique permet de réaliser d'importants gains d'énergie, notamment d'électricité.

Dans l'invention, le carrousel 14 n'est pas entraîné en rotation autour de l'axe O au moins pendant l'étape de refroidissement. Les unités 12 de moulage sont par conséquent immobiles et demeurent en position fermée pendant la mise en œuvre de l'étape de refroidissement.

La durée de l'étape de refroidissement est indépendante de la vitesse d'entraînement en rotation du carrousel 14, laquelle déterminerait sinon le laps de temps pendant lequel une unité 12 de moulage occuperait la position fermée.

L'étape de refroidissement selon le procédé est réalisée simultanément dans toutes les unités 12 ou seulement dans certaines des unités 12 de moulage qui, occupant ladite position fermée, sont dans la zone de refroidissement.

On décrira ci-après deux exemples de mise en œuvre du procédé de refroidissement qui illustrent notamment le fait que la zone de refroidissement correspond à un secteur angulaire plus ou moins important.

Dans un premier exemple de mise en œuvre du procédé de refroidissement de moules chauffés, la zone de refroidissement est dit « maximale » et correspond à un secteur angulaire d'angle (β₁) représenté sur la figure 1.

La zone de refroidissement maximale correspond à un secteur angulaire centré sur l'axe O de rotation de la machine 10 et présentant un angle (β₁) dont la valeur est égale à (360° - α) avec un angle (α) qui correspond au secteur angulaire dans lequel lesdites unités 12 de moulage sont en position ouverte.

Lorsque l'étape de refroidissement est mise en œuvre dans toutes les unités 12 de moulage du secteur angulaire d'angle (β₁), le refroidissement est alors réalisé dans celles des unités 12 de moulage se trouvant en position fermée, ou encore dans toutes les unités 12 de moulage de la machine 10 à l'exception des unités 12 de moulage en position ouverte. Grâce à quoi, l'étape de refroidissement est par conséquent toujours réalisée dans certaines seulement des unités 12 de moulage de la machine 10.

Tel qu'illustré sur la figure 1, la zone de refroidissement maximale correspondant au secteur angulaire d'angle (β₁) comporte respectivement les unités 12 de moulage référencées 121, 122, 123, 124, 125 et 126 qui sont en position fermée.

De préférence, l'introduction du fluide de refroidissement selon l'étape de refroidissement est dans ce premier exemple réalisée simultanément dans certaines seulement de ces unités de moulage pour optimiser le refroidissement obtenu, par exemple réalisée dans au moins une unité 12 de moulage sur deux.

L'ensemble des moules 18 des unités 12 de moulage d'une machine 10 de moulage est susceptible d'être refroidi en répétant successivement ladite étape de refroidissement dans certaines des unités 12 de moulage en position fermée puis dans d'autres de ces unités 12 de moulage, toujours en position fermée.

Dans l'étape de refroidissement du procédé, du fluide de refroidissement n'est donc pas introduit simultanément dans toutes les unités 12 de moulage comme dans l'art antérieur mais dans toutes ou au moins certaines des unités 12 de moulage qui sont en position fermée.

L'introduction de fluide de refroidissement dans la cavité 16 de moulage du moule 18 d'une unité 12 peut être réalisée une ou plusieurs fois, consécutives ou non.

Le fluide de refroidissement est introduit par intermittence lors de l'étape de refroidissement, selon au moins une séquence qui comporte au moins une introduction de fluide pendant une durée (d) déterminée suivie d'un intervalle (t) au cours duquel ladite introduction est interrompue.

A titre d'exemple non limitatif, la durée (d) de l'introduction et celle de l'intervalle (t) sont chacune de l'ordre de 10 secondes.

Avantageusement, la séquence est reproduite un nombre n de fois lors de l'étape de refroidissement qui comporte alors une introduction en alternance du fluide de refroidissement.

Le fait d'introduire le fluide de refroidissement par intermittence permet à la chaleur restante dans le moule 18 de se répartir à nouveau par conduction de manière homogène, en particulier jusqu'à la face 30 interne délimitant la cavité 16 de moulage, pendant l'intervalle de temps entre deux introductions successives de fluide.

Avantageusement, le fait de ne refroidir que certains seulement des moules 18 des unités 12 de moulage de la zone de refroidissement maximale et non pas simultanément ceux de toutes les unités 12 s'y trouvant permet d'obtenir un refroidissement plus efficace à partir d'une source donnée délivrant ledit fluide de refroidissement avec une pression donnée.

Avantageusement, la source de fluide de refroidissement est une source existante telle que celle délivrant l'air sous pression utilisé notamment pour le soufflage dans le mode de fabrication de la machine.

Le fluide de refroidissement est réparti dans un nombre limité d'unités 12 de moulage en position fermée au bénéfice d'un débit et d'une quantité introduite de fluide plus importante, au cours d'une étape de refroidissement, dans chacun desdits moules 18 refroidis.

De préférence, l'introduction du fluide de refroidissement lors de l'étape de refroidissement est réalisée simultanément dans au moins une unité 12 de moulage sur deux se trouvant dans la zone de refroidissement maximale.

Tel qu'indiqué précédemment en référence à la figure 1, les unités 12 de moulage sont dans l'exemple de réalisation au nombre de huit.

On distingue par convention dans la machine 10 de moulage de type rotative, d'une part, des unités 12 de moulage paires, respectivement référencées 120, 122, 124 et 126 et, d'autre part, des unités 12 de moulage impaires, respectivement référencées 121, 123, 125 et 127, une unité 12 de moulage impaire succédant circonférentiellement à une unité 12 de moulage paire tel qu'illustré sur la figure 1.

Chaque unité 12 de moulage d'une parité donnée est donc disposée entre deux unités 12 de moulage de parité opposée.

De préférence, l'étape de refroidissement est réalisée successivement au moins une fois dans toutes les unités 12 de moulage paires, puis au moins une fois dans toutes les unités 12 de moulage impaires.

On refroidit préférentiellement successivement (et non simultanément) les unités 12 de moulage paires et impaires se trouvant dans le secteur angulaire d'angle (β₁) correspondant à la zone de refroidissement maximale dans laquelle lesdites unités 12 de moulage sont en position fermée.

Bien entendu, l'étape de refroidissement pourrait inversement être réalisée dans les moules 18 des unités 12 de moulage impaires, puis dans les moules 18 des unités 12 de moulage paires.

Selon le premier exemple, l'étape de refroidissement est mise en œuvre au moins une fois pour refroidir les moules 18 des unités de moulage paires soit 122, 124 et 126 puis à nouveau pour les unités de moulage impaires 121, 123 et 125.

Après quoi, l'ensemble des moules 18 des unités 12 de moulage se trouvant dans la zone de refroidissement ont été refroidis.

Si des moules 18 de certaines unités 12 de moulage de la machine 10 doivent être (ou être encore) refroidis, le carrousel 14 est entraîné en rotation pour déplacer les unités 12 de moulage.

Le carrousel 14 est par exemple entraîné suivant un déplacement correspondant au moins à deux pas de manière à faire entrer dans la zone de refroidissement maximal les unités 120 et 127 de moulage qui se trouvaient jusqu'alors en position ouverte et donc exclues de la zone de refroidissement.

Dans l'hypothèse d'un déplacement du carrousel 14 de deux pas par rapport à la représentation illustrée sur la figure 1, l'unité 120 de moulage vient se positionner à la place de l'unité 122 et l'unité 127 à la place de l'unité 121.

Les unités 125 et 126 de moulage qui étaient dans la zone de refroidissement vont en sortir pour venir se placer, en position ouverte, à la place des unités 127 et 120 de moulage.

De préférence, dans ce premier exemple, l'étape de refroidissement est successivement mise en œuvre dans les unités 12 de moulage paires soit les unités 120, 122 et 124 puis dans unités 12 de moulage impaires soit les unités 127, 121 et 123.

On décrira maintenant ci-après plus particulièrement le refroidissement, selon l'étape de refroidissement, de l'une 120 des unités 12 de moulage immobilisée après son introduction dans la zone de refroidissement maximale.

Tel que représenté sur la figure 1, l'unité 120 de moulage est par exemple positionnée à l'entrée E de la machine 10 et occupe sa position ouverte et cela correspond à ce qui est illustré sur la figure 3a.

Dans le mode de refroidissement, le carrousel 14 de la machine 10 de moulage est entraîné en rotation à une vitesse V2 donnée pour amener successivement chacune desdites unités 12 de moulage dans la zone de refroidissement.

De préférence, la vitesse V2 de rotation du carrousel 14 dans le mode d'intervention est inférieure à la vitesse V1 d'entraînement du carrousel 14 dans le mode de fabrication de récipients.

Avantageusement, la vitesse V2 de rotation du carrousel 14 correspond à un entraînement ralenti permettant de positionner avec précision les unités 12 de moulage dans la zone de refroidissement et surtout de les immobiliser avant de procéder au refroidissement.

L'unité 120 de moulage va par conséquent quitter la position ouverte qu'elle occupait pour se déplacer dans le sens antihoraire selon la flèche représentée sur la figure 1, chacune des autres unités de moulage se décalant angulairement d'autant, le pas entre les unités 12 de moulage étant constant.

On rappelle que le secteur angulaire centré sur l'axe O de rotation dans lequel les unités 12 de moulage sont en position ouverte correspond à un angle (α).

Dans le premier exemple, l'étape de refroidissement est effectuée sur toutes ou certaines des unités 12 de moulage situées dans la zone de refroidissement maximale, soit le secteur angulaire déterminé d'angle (β₁) qui correspond, tel qu'indiqué précédemment, à un angle de (360°- α).

En poursuivant son parcours, l'unité 120 de moulage va entrer dans la zone de refroidissement maximale, passant automatiquement de la position ouverte à la position fermée, la fermeture (et l'ouverture) des unités 12 étant commandée par un dispositif mécanique du type à came et à galet utilisé en mode de fabrication.

Selon le déplacement de l'unité 120 de moulage dans la zone de refroidissement, l'unité 120 de moulage qui est en position fermée va être ou non verrouillée automatiquement dans ladite position fermée par les moyens 40 de verrouillage.

Il est à noter que la commande de l'ouverture et de la fermeture des unités 12 de moulage comme le verrouillage en position fermée et le déverrouillage sont réalisés mécaniquement de la même manière en mode de refroidissement qu'en mode de production.

On a représenté sur la figure 3b, une unité 12 telle que ladite unité 120 de moulage occupe sa position fermée et avantageusement verrouillée en position fermée.

De préférence, au moins une partie du fluide de refroidissement utilisé lors de l'étape de refroidissement de moules est formé par au moins un gaz sous pression.

Avantageusement, le fluide de refroidissement est constitué par de l'air sous pression.

Le gaz sous pression, tel que l'air, va généralement subir une détente lors de son introduction à l'intérieur de la cavité 16 de moulage.

L'air ne constitue cependant qu'un exemple possible de fluide de refroidissement. En variante, le refroidissement est obtenu au moyen d'au moins un fluide, à l'état gazeux ou à l'état liquide, ou une combinaison de fluides dans l'un et/ou l'autre de ces états.

Toutefois, l'utilisation d'air sous pression présente l'avantage qu'au moins une partie du fluide de refroidissement est alors formé par le même fluide que celui utilisé pour le soufflage lors de la fabrication des récipients, en outre, l'emploi d'air ne pose pas de problèmes de débordement du moule, ce qui serait le cas avec du liquide.

Par conséquent, une même source d'air sous pression peut être utilisée pour chacun des modes de fonctionnement de la machine 10 de moulage, pour former le récipient par soufflage en mode de fabrication et pour refroidir le moule en mode de refroidissement.

On appréciera que l'utilisation d'air sous pression comme fluide de refroidissement des moules utilise une source déjà présente et disponible sur les unités 12 de moulage, sans notamment nécessiter de modification particulière de la machine 10 de moulage.

La pression de l'air de refroidissement des moules 18 est notamment déterminée en fonction du nombre de moules refroidis simultanément au cours d'une étape de refroidissement, du volume de cavité 16 de moulage, etc.

La pression de l'air de refroidissement est notamment déterminée en fonction de la pression maximale délivrée par la source, le choix de la valeur de la pression de l'air étant essentiellement un compromis fonction de la consommation totale de fluide et de l'obtention du refroidissement dans un temps donné. Par ailleurs, de préférence le bruit susceptible d'être généré lors du refroidissement est également pris en considération.

La pression de l'air de refroidissement peut être différente de la pression maximale atteinte pour le soufflage. De préférence l'air de refroidissement est à une pression inférieure à celle de soufflage.

L'introduction sélective du fluide de refroidissement dans certains seulement des moules 18 permet d'introduire une quantité d'air plus importante dans chaque moule.

En effet, en limitant le nombre de moules refroidis simultanément, on obtient à partir d'une source à une pression donnée, un débit de fluide qui est plus important dans chacune des cavités 16 de moulage des moules 18 dans lesquelles ledit fluide de refroidissement est introduit.

Avantageusement, le fluide de refroidissement est concentré dans un nombre déterminé d'unités 12 de moulage lors de chaque étape de refroidissement, grâce à quoi la quantité d'air introduite dans chacune des cavités 16 de moulage est plus importante.

Le fluide de refroidissement forme un flux turbulent à l'intérieur de la cavité 16 de moulage, lequel flux turbulent participe à améliorer l'efficacité du refroidissement en augmentant les échanges thermiques avec l'ensemble de la surface interne du moule 18 délimitant la cavité 16 de moulage.

En variante non représentée, au moins une partie du fluide de refroidissement est constituée par un mélange d'air et d'eau, et ledit mélange forme avantageusement un brouillard.

Lorsque le brouillard entre initialement en contact avec le moule 18 chaud dont la température est généralement supérieure à 100°C, il se produit avantageusement un changement d'état, de l'état liquide à l'état gazeux, qui participe à l'obtention d'un refroidissement efficace du moule.

Du fluide de refroidissement est introduit à l'intérieur de la cavité 16 de moulage de chaque moule 18 refroidi au moins par la tige 22 d'étirage de l'unité 12 de moulage.

Tel qu'illustré sur la figure 3c, on commande par conséquent la descente axiale en position basse des moyens 20 de soufflage associés dans l'exemple à l'unité 120 de moulage, puis ou simultanément celle de la tige 22 d'étirage.

Du fluide de refroidissement est également susceptible d'être introduit à l'intérieur de la cavité 16 de moulage par les moyens 44 de démoulage du fond équipant les unités 12 de moulage de ladite machine 10.

Avantageusement, l'air sous pression formant tout ou partie du fluide de refroidissement est introduit dans chaque cavité 16 de moulage de moule 18 à refroidir de manière combinée, d'une part par la tige 22 d'étirage et, d'autre part, par les moyens 44 de démoulage du fond.

Que l'air sous pression soit introduit par la tige 22 d'étirage et/ou par les moyens 44 de démoulage du fond, on utilise là encore pour le refroidissement du moule 18 en mode de refroidissement des moyens existants, par ailleurs utilisés en mode de fabrication.

Tel qu'illustré sur la figure 3d, la tige 22 d'étirage est déplacée axialement à l'intérieur de la cavité 16 de moulage au cours de ladite étape de refroidissement pour réaliser axialement un balayage de la cavité 16 de moulage, par exemple du haut vers le bas et réciproquement, suivant une course déterminée.

De préférence et tel qu'illustré sur la figure 3e, la tige 22 d'étirage est entrainée sélectivement en rotation pour réaliser un balayage circulaire de chaque cavité 16 de moulage des moules 18 refroidis au moyen de fluide de refroidissement.

La tige 22 d'étirage est par exemple entraînée de manière continue sur elle-même pour réaliser un balayage sur 360° degrés ou en variante séquentiellement.

L'entraînement en rotation de la tige 22 d'étirage s'effectue avantageusement en combinaison avec le déplacement axial de la tige, l'ensemble étant contrôlé en commandant sélectivement les moyens 32 d'entraînement.

Les orifices 38 ménagés sur la tige 22 d'étirage sont avantageusement répartis axialement et circonférentiellement sur la tige et sont conformés (par exemple orientation de l'axe de l'orifice par rapport à la direction axiale, dimensions) pour diriger l'air de refroidissement sur des zones déterminées du récipient au cours du mode de fabrication.

Un déplacement axial différent de la tige 22 d'étirage permet par conséquent d'obtenir, en mode de refroidissement, une projection du fluide de refroidissement du moule dans l'ensemble de la cavité 16 de moulage (et non pas seulement localisée sur les zones de la cavité 16 de moulage du moule 18 correspondant auxdites zones du récipient).

On rappelle qu'un déplacement de la tige 22 d'étirage particulier, propre au refroidissement du moule lors du mode de refroidissement, est simple à réaliser lorsque les moyens 32 d'entraînement associés à la tige 22 d'étirage sont constitués par un actionneur formé par au moins un moteur linéaire.

Avantageusement, l'entraînement axial et/ou en rotation de la tige 22 d'étirage est déterminé pour réaliser radialement un balayage complet de l'ensemble de la cavité 16 de moulage.

Pour chaque moule 18 refroidi, le fluide de refroidissement est introduit dans une cavité 16 de moulage formant un volume fermé comme on peut le voir sur la figure 3d ou 3e, la cavité 16 de moulage étant formée dès lors que l'unité 12 de moulage est en position fermée.

En position fermée de l'unité 12 de moulage, les demi-moules 24 et, le cas échéant, le fond 28 de moule sont réunis de manière jointive pour former la cavité 16 de moulage du récipient à l'intérieur du moule 18.

Tel qu'illustré sur les figures 3d et 3e notamment, dans le mode de refroidissement caractérisé par l'absence de préforme, l'orifice 46 ménagé dans la face supérieure permet le passage axial de la tige 22 d'étirage à l'intérieur de la cavité 16 de moulage pour que le fluide de refroidissement du moule 18 formé, ici par l'air sous pression, y soit introduit.

De préférence, du fluide de refroidissement est également introduit dans la cavité 16 de moulage par l'intermédiaire des moyens 44 de démoulage du fond pour améliorer le refroidissement et plus particulièrement celui du fond 28 de moule.

La descente axiale de la tige 22 d'étirage s'accompagne de celle des moyens 20 de soufflage qui vont venir coiffer la face supérieure du moule 18 de l'unité 12 de moulage en position fermée.

Les moyens 20 de soufflage permettent d'isoler la cavité 16 de moulage par rapport à l'extérieur. A cet effet, par exemple le nez de la tuyère comporte des moyens d'étanchéité qui coopèrent en position basse avec la face supérieure du moule 18.

Le fluide de refroidissement est introduit par la tige 22 d'étirage de manière continue, remplissant la cavité 16 de moulage et s'en échappant par l'orifice 46.

Avantageusement et tel qu'illustré sur la figure 3f, pendant et après l'étape de refroidissement du moule 18, le fluide de refroidissement lorsqu'il est formé par de l'air sous pression s'échappe à travers ledit orifice 46 pour être évacué à travers un dispositif d'échappement (non représenté) que comportent les moyens 20 de soufflage et qui comporte communément un silencieux.

On limite ainsi les bruits liés à la détente de l'air sous pression puis à son évacuation.

Avantageusement, l'évacuation de l'air de refroidissement du moule 18 à travers un tel silencieux permet de contrôler la pression à l'intérieur de la cavité 16 de moulage ce qui permet de relever les moyens 20 de soufflage vers la position haute et ensuite d'ouvrir à nouveau l'unité 12 de moulage.

De préférence, l'introduction du fluide de refroidissement au cours de l'étape de refroidissement est mise en œuvre dans tous les moules 18 des unités 12 de moulage (ou certains d'entre eux seulement) qui sont en position fermée et qui sont verrouillés en position fermée par les moyens 40 de verrouillage.

Le verrouillage de l'unité 12 de moulage en position fermée permet de limiter les fuites du fluide de refroidissement du moule 18 vers l'extérieur, tout particulièrement au niveau du plan de joint entre lesdits demi-moules 24.

Lorsque l'unité 12 de moulage comporte des moyens 42 de compensation, ces moyens 42 de compensation sont de préférence activés et mis en pression également pour contribuer à l'étape de refroidissement du moule dans le mode de refroidissement.

Les moyens 42 de compensation vont s'opposer aux efforts exercés par le fluide de refroidissement sous pression introduit à l'intérieur de la cavité 16 de moulage et ce faisant éviter l'apparition d'un jeu au niveau du plan de joint.

L'apparition d'un tel jeu se traduirait en effet par des fuites du fluide de refroidissement au niveau du plan de joint et cela bien que l'unité 12 de moulage soit verrouillée en position fermée car le verrouillage étant mécanique il existe nécessairement un jeu fonctionnel.

Lorsque les moyens 42 de compensation sont activés au cours de l'étape de refroidissement, le fluide de refroidissement du moule 18 s'évacue principalement par le silencieux des moyens 20 de soufflage.

Avantageusement, l'air de refroidissement utilisé pour refroidir les moules est susceptible d'être récupéré pour être réutilisé.

Une fois que le fluide de refroidissement cesse d'être introduit dans la cavité 16 de moulage du moule 18 d'une unité sur deux, paire ou impaire, se trouvant en position fermée dans le secteur angulaire déterminé, on procède alors au retour en position haute des moyens 20 de soufflage et de la tige 22 d'étirage tel que cela est illustré sur la figure 3f.

Les moyens 42 de compensation cessent également d'être actifs.

L'unité 12 de moulage se trouve alors dans la position représentée à la figure 3g, soit une position analogue à celle initialement occupée à la figure 3b.

De préférence, chaque unité 12 de moulage comporte des moyens de mesure (non représentés) de la température du moule 18.

Dans le mode de fabrication, ces moyens de mesure, tels qu'une sonde de température, sont en effet utilisés pour déterminer si le moule 18 chauffé par les moyens 34 de chauffage a atteint et/ou est à la température requise pour la fabrication des récipients.

De préférence, ces mêmes moyens de mesure de température du moule sont utilisés dans le mode de refroidissement pour déterminer si le refroidissement du moule est suffisant pour qu'une intervention puisse être effectuée sur le moule 18 en toute sécurité ou si un nouveau refroidissement doit être opéré.

En variante, d'autres moyens de mesure de température du moule 18 sont susceptibles d'être utilisés.

Toutefois, on appréciera là encore que l'utilisation de moyens de mesure de température équipant déjà l'unité 12 de moulage permet une mise en œuvre simple et économique du procédé de refroidissement selon l'invention dès lors qu'aucune modification de la machine 10 de moulage n'est nécessaire.

Avantageusement, ledit procédé de refroidissement comporte au moins une étape de mesure de température pour déterminer la température des moules 18 en cours de refroidissement ou refroidis.

Ladite étape de refroidissement de moule est répétée jusqu'à ce que ladite température mesurée du moule 18 soit inférieure ou égale à une température Tc de consigne déterminée.

La température Tc de consigne est par exemple une température inférieure à 50°C afin de permettre l'intervention humaine d'au moins un opérateur en toute sécurité, de préférence sans équipement de protection spécifique, et cela quel que soit le but de l'intervention.

De préférence, une alerte est émise lorsqu'une température approchant la température Tc de consigne donnée est atteinte, par exemple de l'ordre de 60°C (degrés Celsius).

L'étape de refroidissement peut ensuite se poursuivre ou non, par exemple pour atteindre une valeur de 20°C, selon notamment qu'il est choisi que l'opérateur intervienne avec ou sans un équipement de protection spécifique.

L'intervention consiste par exemple en une opération de maintenance, telle qu'un nettoyage de l'empreinte du moule ou encore un changement de moule.

Lorsque, après avoir été refroidi par une ou plusieurs étapes de refroidissement, le carrousel 14 est à nouveau entraîné en rotation, l'unité 120 de moulage est positionnée à la sortie S de la machine 10 où elle est à nouveau en position ouverte tel qu'illustré sur la figure 3h.

Bien entendu, l'ouverture de l'unité 120 est précédée du déverrouillage des moyens 40 de verrouillage qui maintenaient jusqu'alors l'unité en position fermée.

La procédure qui vient d'être décrite en référence aux figures 3a à 3h du refroidissement d'un moule 18, arbitrairement et pour l'exemple celui de l'unité 120 de moulage, est simultanément réalisée de la même manière dans d'autres unités 12 de moulage.

Dans le premier exemple avec la zone de refroidissement maximale, l'étape de refroidissement est de préférence mise en œuvre successivement dans les unités 12 de moulage paires puis impaires.

L'étape de refroidissement peut être répétée une ou plusieurs fois dans un groupe donné, formé par exemple des unités 12 de moulage paires ou impaires, et ceci jusqu'à ce que la température Tc de consigne soit atteinte.

On décrira ci-après, par comparaison notamment avec le premier exemple, un deuxième exemple de mise en œuvre du procédé de refroidissement de moules chauffés.

Dans ce deuxième exemple, la zone de refroidissement est dite « optimale » et correspond à un secteur angulaire d'angle (β₂) représenté avec l'angle (a) sur la figure 1.

La zone de refroidissement optimale correspond à un secteur angulaire centré sur l'axe O de rotation de la machine 10 et présentant un angle (β₂) dont la valeur est inférieure à (β₁). Il est rappelé ici que (β₁) = (360° - α) et que l'angle (α) correspond au secteur angulaire dans lequel lesdites unités 12 de moulage sont en position ouverte.

Par comparaison, la zone de refroidissement optimale est plus réduite que la zone de refroidissement maximale de sorte que le nombre d'unités 12 de moulage s'y trouvant est inférieur.

De préférence, la valeur de l'angle (β₂) déterminant le secteur angulaire qui correspond à ladite zone de refroidissement optimale est choisie de manière que les unités 12 de moulage s'y trouvant soient non seulement en position fermée mais également que ces unités 12 de moulage soient verrouillées en position fermée.

Toutefois, l'utilisation ou non des moyens 40 de verrouillage est notamment déterminée en fonction de la pression du fluide de refroidissement. Cela vaut également pour l'utilisation ou non des moyens 42 de compensation.

De préférence, les moyens 42 de compensation ne sont utilisés qu'en combinaison avec les moyens 40 de verrouillage des unités 12 de moulage en position fermée.

Lorsque la pression du fluide de refroidissement est par exemple de l'ordre de 7 bars, l'utilisation des moyens de 40 de verrouillage permet de limiter les pertes liées aux fuites et également d'éviter les sifflements émis lors de telles fuites.

De préférence, l'introduction du fluide de refroidissement selon l'étape de refroidissement est réalisée simultanément dans toutes les unités 12 de moulage se trouvant dans ladite zone de refroidissement optimale.

Dans le cas du deuxième exemple, la zone de refroidissement correspond à un secteur angulaire centré sur l'axe (O) de rotation de la machine (10) et présentant un angle (β₂) dont la valeur est par exemple inférieure ou égale à 180°.

Tel qu'illustré sur la figure 1, on procède par exemple à la mise en œuvre de l'étape de refroidissement dans les unités 12 de moulage se trouvant dans ladite zone de refroidissement optimale, soit les unités 122, 123, 124 et 125.

L'étape de refroidissement est réalisée simultanément dans certaines seulement des unités 12 de moulage, plus précisément dans la moitié des unités selon l'exemple représenté à la figure 1.

Une fois refroidis à une température inférieure ou égale à la température Tc de consigne, une intervention est alors possible sur les moules 18 de chacune de ces unités 12 de moulage, notamment un nettoyage ou un démontage réalisé par au moins un opérateur.

L'intervention peut être commencée immédiatement sur ceux des moules 18 qui ont été refroidis ou après que l'ensemble des moules 18 de la machine 10 ait été refroidi.

Du fait que les unités 12 de moulage sont immobiles lors de l'étape de refroidissement, il est possible pour au moins un opérateur d'intervenir sur les moules 18 refroidis des unités 12 de moulage se trouvant, en position ouverte, dans le secteur angulaire d'angle (α), alors que d'autres moules 18 sont encore en phase de refroidissement.

Avantageusement, tout ou partie de l'intervention sur les moules 18 est réalisée en temps masqué, parallèlement à la mise en œuvre de l'étape de refroidissement dans la zone de refroidissement.

Comme décrit précédemment, une fois opéré le refroidissement des moules 18 des unités 12 de moulage se trouvant dans la zone de refroidissement optimale, le carrousel 14 est entraîné en rotation de 180° de manière à venir positionner les autres unités 12 de moulage, à savoir les unités 126, 127, 120 et 121.

Le carrousel 14 est arrêté pour immobiliser lesdites unités 126, 127, 120 et 121 de moulage dans la zone de refroidissement optimale et l'étape de refroidissement est à nouveau mise en oeuvre pour refroidir les moules 18 de chacune de ces unités.

Avantageusement, un opérateur est susceptible d'intervenir sur les moules 18 refroidis notamment des unités 123 et 124 occupant la position ouverte après la rotation à 180° du carrousel 14 qui permet de réaliser le refroidissement de l'autre moitié des moules des unités 12 de moulage.

## Revendications

1. Procédé de refroidissement de moules chauffés d'une machine (10) de moulage de récipients en matériau thermoplastique par étirage-soufflage de préformes chaudes au moyen d'au moins un fluide sous pression, ladite machine (10) de type rotatif comportant au moins des unités (12) de moulage, comprenant chacune au moins un moule et qui sont agencées en périphérie d'un carrousel (14) qui est apte à être entraîné en rotation autour d'une axe (O) de rotation de la machine, chaque unité (12) de moulage comportant au moins des moyens (20) de soufflage intégrant une tige (22) d'étirage, des moyens (34) de chauffage associés au moule (18) de l'unité pour le chauffer, ledit moule (18) comportant au moins deux demi-moules (24) qui comportent chacun une face (30) interne de moulage et qui sont respectivement montés sur des supports (26) mobiles autour d'un axe (A) entre au moins une position ouverte et une position fermée de l'unité dans laquelle lesdites faces (30) internes desdits au moins deux demi-moules (24) joints délimitent ensemble au moins une partie d'une cavité (16) de moulage du récipient,
**caractérisé en ce que** ledit procédé de refroidissement comporte, pour refroidir lesdits moules (18), au moins une étape de refroidissement consistant à introduire sélectivement au moins un fluide de refroidissement à l'intérieur de la cavité (16) de moulage d'au moins certaines des unités (12) de moulage qui, après arrêt du carrousel (14) pour les immobiliser au moins durant ladite étape de refroidissement, se trouvent dans une zone de refroidissement déterminée dans laquelle lesdites unités (12) de moulage sont en position fermée.

2. Procédé selon la revendication 1, **caractérisé en ce que** l'introduction de fluide de refroidissement selon l'étape de refroidissement est réalisée simultanément dans toutes les unités (12) de moulage se trouvant dans ladite zone de refroidissement.

3. Procédé selon la revendication 1, **caractérisé en ce que** l'introduction de fluide de refroidissement selon l'étape de refroidissement est réalisée simultanément certaines seulement des unités (12) de moulage se trouvant dans ladite zone de refroidissement.

4. Procédé selon l'une quelconque des revendications 1 à 3, **caractérisé en ce que** la zone de refroidissement correspond à un secteur angulaire centré sur l'axe (O) de rotation de la machine (10) et présentant un angle (β₁ ; β₂) dont la valeur est inférieure ou égale à (360° - α) avec un angle (α) qui correspond au secteur angulaire dans lequel lesdites unités (12) de moulage sont en position ouverte.

5. Procédé selon l'une quelconque des revendications précédentes, **caractérisé en ce que** la zone de refroidissement correspond à un secteur angulaire centré sur l'axe (O) de rotation de la machine (10) et présentant un angle (β₂) dont la valeur est inférieure ou égale à 180°.

6. Procédé selon l'une quelconque des revendications précédentes, **caractérisé en ce que** l'introduction du fluide de refroidissement au cours de l'étape de refroidissement s'effectue dans des unités (12) de moulage qui sont verrouillées en position fermée par des moyens (40) de verrouillage que comportent chacune desdites unités (12) de moulage de la machine (10).

7. Procédé l'une quelconque des revendications précédentes, **caractérisé en ce que** du fluide de refroidissement est introduit à l'intérieur de la cavité (16) de moulage par au moins une tige (22) d'étirage.

8. Procédé selon la revendication 7, **caractérisé en ce que** la tige (22) d'étirage est déplacée axialement à l'intérieur de la cavité (16) de moulage au cours de ladite étape de refroidissement pour réaliser un balayage axial de la cavité (16) de moulage.

9. Procédé selon la revendication 7 ou 8, **caractérisé en ce que** la tige (22) d'étirage est entrainée sélectivement en rotation pour réaliser un balayage circulaire de la cavité (16) de moulage au moyen dudit fluide de refroidissement.

10. Procédé selon l'une quelconque des revendications précédentes, **caractérisé en ce que** au moins une portion de fluide de refroidissement est introduite à l'intérieur de la cavité (16) de moulage par des moyens (44) de démoulage du fond équipant les unités (12) de moulage de ladite machine.

11. Procédé l'une quelconque des revendications précédentes, **caractérisé en ce que** du fluide de refroidissement est introduit par intermittence lors de l'étape de refroidissement selon au moins une séquence qui comporte au moins une introduction dudit fluide pendant une durée (d) déterminée suivie d'un intervalle (t) au cours duquel ladite introduction est interrompue.

12. Procédé selon l'une quelconque des revendications précédentes, **caractérisé en ce qu'**il comporte au moins une étape de mesure de température pour déterminer la température des moules (18) refroidis et **en ce que** ladite étape de refroidissement est répétée dans lesdites unités (12) de moulage jusqu'à ce que ladite température des moules (18) soit inférieure ou égale à une température (Tc) de consigne déterminée.

## Patentansprüche

1. Verfahren zum Kühlen von erwärmten Formen einer Maschine (10) zum Formen von Behältern aus thermoplastischem Material durch Streckblasen von warmen Vorformen mittels wenigstens eines unter Druck stehenden Fluids, wobei die Maschine (10) vom rotierenden Typ wenigstens Formeinheiten (12) aufweist, die jeweils wenigstens eine Form umfassen und die am Umfang eines Karussells (14) angeordnet sind, welches um eine Drehachse (0) der Maschine drehend antreibbar ist, wobei jede Formeinheit (12) wenigstens Blasmittel (20), in die eine Streckstange (22) integriert ist, und Heizmittel (34), die der Form (18) der Einheit zugeordnet sind, um sie zu erwärmen, aufweist, wobei die Form (18) wenigstens zwei Formhälften (24) aufweist, welche jeweils eine innere Formfläche (30) aufweisen und welche jeweils an Trägern (26) angebracht sind, die um eine Achse (A) zwischen wenigstens einer geöffneten Position und einer geschlossenen Position der Einheit, in welcher die inneren Flächen (30) der wenigstens zwei zusammengefügten Formhälften (24) zusammen wenigstens einen Teil eines Formhohlraums (16) des Behälters begrenzen, beweglich sind,
**dadurch gekennzeichnet, dass** das Verfahren zum Kühlen, um die Formen (18) zu kühlen, wenigstens einen Schritt des Kühlens aufweist, der darin besteht, selektiv wenigstens ein Kühlfluid ins Innere des Formhohlraums (16) wenigstens einiger der Formeinheiten (12) einzuleiten, welche sich nach dem Stoppen des Karussells (14), um sie wenigstens während des Schrittes des Kühlens anzuhalten, in einem bestimmten Kühlbereich befinden, in welchem sich die Formeinheiten (12) in der geschlossenen Position befinden.

2. Verfahren nach Anspruch 1, **dadurch gekennzeichnet, dass** die Einleitung von Kühlfluid gemäß dem Schritt des Kühlens gleichzeitig in allen Formeinheiten (12) durchgeführt wird, die sich im Kühlbereich befinden.

3. Verfahren nach Anspruch 1, **dadurch gekennzeichnet, dass** die Einleitung von Kühlfluid gemäß dem Schritt des Kühlens nur in einigen der Formeinheiten (12) durchgeführt wird, die sich im Kühlbereich befinden, gleichzeitig durchgeführt wird.

4. Verfahren nach einem der Ansprüche 1 bis 3, **dadurch gekennzeichnet, dass** der Kühlbereich einem Winkelsektor entspricht, der auf der Drehachse (O) der Maschine (10) zentriert ist und einen Winkel (β₁, β₂) aufweist, dessen Wert kleiner oder gleich (360° - α) ist, mit einem Winkel (α), der dem Winkelsektor entspricht, in welchem sich die Formeinheiten (12) in der offenen Position befinden.

5. Verfahren nach einem der vorhergehenden Ansprüche, **dadurch gekennzeichnet, dass** der Kühlbereich einem Winkelsektor entspricht, der auf der Drehachse (O) der Maschine (10) zentriert ist und einen Winkel (β₂) aufweist, dessen Wert kleiner oder gleich 180° ist.

6. Verfahren nach einem der vorhergehenden Ansprüche, **dadurch gekennzeichnet, dass** die Einleitung des Kühlfluids während des Schrittes des Kühlens in Formeinheiten (12) durchgeführt wird, welche in der geschlossenen Position durch Verriegelungsmittel (40) verriegelt sind, welche jede der Formeinheiten (12) der Maschine (10) aufweist.

7. Verfahren nach einem der vorhergehenden Ansprüche, **dadurch gekennzeichnet, dass** Kühlfluid durch wenigstens eine Streckstange (22) ins Innere des Formhohlraums (16) eingeleitet wird.

8. Verfahren nach Anspruch 7, **dadurch gekennzeichnet, dass** die Streckstange (22) während des Schrittes des Kühlens im Inneren des Formhohlraums (16) axial verschoben wird, um ein axiales Überstreichen des Formhohlraums (16) durchzuführen.

9. Verfahren nach Anspruch 7 oder 8, **dadurch gekennzeichnet, dass** die Streckstange (22) selektiv drehend angetrieben wird, um ein kreisförmiges Überstreichen des Formhohlraums (16) mittels des Kühlfluids durchzuführen.

10. Verfahren nach einem der vorhergehenden Ansprüche, **dadurch gekennzeichnet, dass** wenigstens ein Teil des Kühlfluids durch Mittel (44) zur Entformung des Bodens, mit denen die Formeinheiten (12) der Maschine ausgestattet sind, ins Innere des Formhohlraums (16) eingeleitet wird.

11. Verfahren nach einem der vorhergehenden Ansprüche, **dadurch gekennzeichnet, dass** im Schritt des Kühlens Kühlfluid intermittierend gemäß wenigstens einer Folge eingeleitet wird, welche wenigstens eine Einleitung des Fluids während einer bestimmten Dauer (d), gefolgt von einem Intervall (t), in welchem die Einleitung unterbrochen ist, umfasst.

12. Verfahren nach einem der vorhergehenden Ansprüche, **dadurch gekennzeichnet, dass** es wenigstens einen Schritt der Temperaturmessung umfasst, um die Temperatur der gekühlten Formen (18) zu bestimmen, und dadurch, dass der Schritt des Kühlens in den Formeinheiten (12) wiederholt wird, bis die Temperatur der Formen (18) kleiner oder gleich einer bestimmten Solltemperatur (Tc) ist.

## Claims

1. Method for cooling heated moulds of a machine (10) for moulding containers made of thermoplastic material by stretch blow-moulding hot preforms by means of at least one pressurized fluid, said rotary type machine (10) having at least moulding units (12) that each comprise at least one mould and are arranged at the periphery of a carousel (14) which is able to be driven in rotation about an axis of rotation (O) of the machine, each moulding unit (12) having at least blow-moulding means (20) that incorporate a stretching rod (22), heating means (34) associated with the mould (18) of the unit in order to heat said mould (18), said mould (18) having at least two half-moulds (24), which each have an internal moulding face (30) and are each mounted on supports (26) that are movable about an axis (A) between at least one open position and a closed position of the unit in which said internal faces (30) of said at least two joined half-moulds (24) together delimit at least a part of a cavity (16) for moulding the container,
**characterized in that** said cooling method comprises, for cooling said moulds (18), at least one cooling step that consists in selectively introducing at least one cooling fluid into the moulding cavity (16) of at least some of the moulding units (12) which, after the carousel (14) has been stopped in order to immobilize them at least during said cooling step, are located in a given cooling zone in which said moulding units (12) are in the closed position.

2. Method according to Claim 1, **characterized in that** the introduction of cooling fluid in the cooling step is realized simultaneously in all the moulding units (12) located in said cooling zone.

3. Method according to Claim 1, **characterized in that** the introduction of cooling fluid in the cooling step is realized simultaneously for only some of the moulding units (12) located in said cooling zone.

4. Method according to any one of Claims 1 to 3, **characterized in that** the cooling zone corresponds to an angular sector that is centred on the axis of rotation (O) of the machine (10) and exhibits an angle (β₁; β₂) of which the value is less than or equal to (360° - α) with an angle (α) that corresponds to the angular sector in which said moulding units (12) are in an open position.

5. Method according to any one of the preceding claims, **characterized in that** the cooling zone corresponds to an angular sector that is centred on the axis of rotation (O) of the machine (10) and exhibits an angle (β₂) of which the value is less than or equal to 180°.

6. Method according to any one of the preceding claims, **characterized in that** the introduction of the cooling fluid during the cooling step is carried out in moulding units (12) that are locked in the closed position by locking means (40) that each of said moulding units (12) of the machine (10) have.

7. Method according to any one of the preceding claims, **characterized in that** cooling fluid is introduced into the moulding cavity (16) by at least one stretching rod (22) .

8. Method according to Claim 7, **characterized in that** the stretching rod (22) is moved axially inside the moulding cavity (16) during said cooling step in order to carry out axial sweeping of the moulding cavity (16).

9. Method according to Claim 7 or 8, **characterized in that** the stretching rod (22) is driven selectively in rotation in order to carry out circular sweeping of the moulding cavity (16) by means of said cooling fluid.

10. Method according to any one of the preceding claims, **characterized in that** at least one portion of cooling fluid is introduced into the moulding cavity (16) by means (44) for demoulding from the bottom, with which the moulding units (12) of said machine are equipped.

11. Method according to any one of the preceding claims, **characterized in that** cooling fluid is introduced intermittently during the cooling step according to at least one sequence that has at least one introduction of said fluid for a given time (d) followed by an interval (t) during which said introduction is interrupted.

12. Method according to any one of the preceding claims, **characterized in that** it has at least one temperature measuring step for determining the temperature of the cooled moulds (18), and **in that** said cooling step is repeated in said moulding units (12) until said temperature of the moulds (18) is less than or equal to a given setpoint temperature (Tc).
